(19) Europäisches Patentamt
European Patent Office
Office européen des brevets

(11) Publication number: **0 450 683 A1**

(12) **EUROPEAN PATENT APPLICATION**

(21) Application number: **91200559.2**

(22) Date of filing: **15.03.91**

(51) Int. Cl.[5]: **A01N 55/02**, A01N 25/22, //(A01N55/02,37:40,35:04)

(30) Priority: **26.03.90 US 499129**

(43) Date of publication of application: **09.10.91 Bulletin 91/41**

(84) Designated Contracting States: **DE ES FR GB IT**

(71) Applicant: **AKZO N.V.**
**Velperweg 76**
**NL-6824 BM Arnhem(NL)**

(72) Inventor: **Anderson, Donald Frederick**
**11-2 Nicole Ct.**
**Ossining, New York 10562(US)**

(74) Representative: **Schalkwijk, Pieter Cornelis et al**
**AKZO N.V., Patent Department (Dept. CO),**
**P.O. Box 9300**
**NL-6800 SB Arnhem(NL)**

(54) **Stabilization of phenoxarsine microbiocides.**

(57) Phenoxarsine compositions (e.g., 10,10'-oxybisphenox-arsine) are stabilized against ultraviolet light decomposition by using a stabilizer mixture of a 2-hydroxybenzophenone and a 3,5-di-tert-butyl-4-hydroxybenzoate.

EP 0 450 683 A1

## BACKGROUND OF THE INVENTION

Phenoxarsine microbiocides are a known class of biocidal agents and include the bisphenoxyarsines. Such biocidal compounds, however, are subject to ultraviolet degradation.

U.S. Patent No. 4,761,247 to N. M. Rei et al. recognizes the problem of ultraviolet-catalyzed oxidation of phenoxarsine microbiocides, e.g., when in solution. It suggests the use of phenolic antioxidants to stabilize such compositions.

## SUMMARY OF THE INVENTION

The present invention relates to the stabilization of phenoxarsine compositions by use of a mixture of a 2-hydroxy-benzophenone compound and a 3,5-di-tert-butyl-4-hydroxybenzoate compound.

## DETAILED DESCRIPTION OF THE INVENTION

The class of phenoxarsine microbiocides which the instant invention is intended to stabilize against ultraviolet-caused degradation are known to persons in the art and are described in such patents as U.S. Patent Nos. 4,624,679 and 4,761,247, for example. A preferred compound is 10,10'-oxybisphenox-arsine (OBPA). Others include 10-chlorophenoxarsine, 10-iodophenoxarsine, 10-bromophenoxarsine, 4-methyl-10-chloro-phenoxarsine, 2-tert-butyl-10-chlorophenoxarsine, 1,4-dimethyl-10-chlorophenoxarsine, 2-methyl-8,10-dichloro-phenoxarsine, 1,3,10-trichlorophenoxarsine, 2,6,10-trichlorophenoxarsine, and 1,2,4,10-tetrachlorophenoxarsine.

The above referenced phenoxarsine compounds are advantageously in a solution comprising an appropriate solvent (e.g., an aryl alkanol such as benzyl alcohol and/or a primary aliphatic alcohol such as 2-ethylhexanol, isodecyl alcohol, and the like). The relative amounts of solvent, arsine compound, and stabilizer mixture (to be described below) can range from about 70%-80% solvent, 20%-30% arsine compound and 1%-10%, stabilizer based on the weight of arsine compound. The stabilizer mixture used herein comprises a mixture of two differing classes of ultraviolet stabilizer compounds in a relative ratio of from about 1:10 to about 10:1 to each other on a weight basis.

The first class of stabilizer is a 2-hydroxybenzophenone compound which is of the general formula

```
C(O)Ar
|  OH
| /
Ph
|
OR
```

where Ph represents the benzene ring nucleus for such compound, Ar is aryl and R can be alkyl (e.g., higher alkyl of from about C5 to about C12. A preferred compound is 2-hydroxy-4-n-octyloxybenzophenone which is commercially available under the trademark CYASORB UV531 from American Cyanamid Co. Other possible stabilizers to use include 2-hydroxy-4-isooctyloxybenzophenone and 2-hydroxy-4-dodecyloxy-benzophenone.

The second class of stabilizers are 3,5-di-t-butyl-4-hydroxybenzoate compounds of the general formula

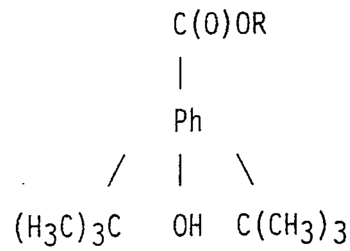

where Ph is as defined before and R is alkyl of from about 8 to about 20 carbon atoms. A preferred stabilizer of this type is n-hexadecyl 3,5-di-tert-butyl-4-hydroxybenzoate which is available under the trade name CYASORB UV2908 from American Cyanamid Co.

In order to achieve the highest levels of stabilization in accordance with the present invention, it is recommended that the stabilized compositions be stored under substantially anhydrous and anaerobic conditions.

The instant invention is further illustrated by the Examples which follow.

EXAMPLE 1

This illustrates the preparation of a stock solution comprising 10,10'-oxybisphenoxarsine (OBPA).

Twenty grams of OBPA was weighed into a 150 ml beaker and 80 gm of solvent (either isodecanol or benzyl alcohol) was then added. The solution was then heated (180 ° F maximum temperature). Charcoal (1 g) and 1 g of diatomite filter aid (SPEEDEX) were then added. The mixture was filtered with the aid of a Buchner funnel and was stored in amber glass bottles.

EXAMPLES 2-5

Four samples were prepared (two containing benzyl alcohol and two containing isodecanol) by weighing 10 of the respective stock solutions prepared as described in Example 1, and diluting each with 90 g diisodecylphthalate plasticizer. Examples 3 and 5 are in accordance with the present invention. In Examples 2 and 3 the solvent used was benzyl alcohol, in Examples 4 and 5 it was isodecanol.

The Table below sets forth the % OBPA in the various samples after various hours exposure to ultraviolet radiation.

| | % OBPA After UV Exposure (in hrs) | | |
|---|---|---|---|
| Example No. | 0 | 26 | 50 |
| 2* | 2.02 | 138 | 1.00 |
| 3** | 2.00 | 1.74 | 1.40 |
| 4* | 2.04 | 1.85 | 1.73 |
| 5** | 2.01 | 1.99 | 1.98 |

* contained no stabilizer.

** contained 0.5% 3,5-bis(1,1-dimethylethyl)-4-hydroxy benzoic acid, hexadecyl ester light stabilizer (CYASORB UV-2908 brand) and 0.5% [2-hydroxy-4-(octyloxy)phenyl]phenylmethane light absorber (CYASORB UV-531 brand).

| | % OBPA After UV Exposure (in hrs) | | |
|---|---|---|---|
| Example No. | 122 | 194 | 314 |
| 2* | 0.272 | 0 | 0 |
| 3** | 0.75 | 0.30 | 0.01 |
| 4* | 1.38 | 1.13 | 0.73 |
| 5** | 1.89 | 1.81 | 1.67 |

The foregoing Examples illustrate certain preferred embodiments of the present invention and, for that reason, should not be construed as limiting the instant invention. The scope of protection sought is set forth in the claims which follow.

## Claims

1. A phenoxarsine composition stabilized against ultraviolet light degradation which comprises a phenoxarsine compound and an effective amount of a stabilizer composition comprising a 2-hydroxybenzophenone compound and a 3,5-di-t-butyl-4-hydroxybenzoate compound.

2. A composition as claimed in Claim 1 wherein the stabilizer composition is present at from about 1% to about 10%, by weight of the phenoxarsine compound.

3. A composition as claimed in Claim 1 or 2 wherein the 2-hydroxybenzophenone compound is 2-hydroxy-4-n-octyloxy-benzophenone.

4. A composition as claimed in Claim 1 or 2 wherein the 3,5-di-t-butyl-4-hydroxybenzoate compound is 3,5-di-tert-butyl-4-hydroxybenzoate.

5. A composition as claimed in Claim 1 wherein the stabilizer composition contains a mixture of 2-hydroxy-4-n-octylbenzophenone and 3,5-di-t-butyl-4-hydroxybenzoate at a weight ratio of from about 1:10 to about 10:1 to each other.

6. A composition as claimed in Claim 5 wherein the stabilizer composition is present at from about 1% to about 10% by weight of the phenoxarsine compound.

European Patent Office

# EUROPEAN SEARCH REPORT

Application Number

**EP 91 20 0559**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 304 180 (BASF CORP.)<br>* Page 3, line 1 - page 4, line 27; page 5, lines 25-35; claim 1 *<br>– – – | 1-6 | A 01 N 55/02<br>A 01 N 25/22 //<br>(A 01 N 55/02<br>A 01 N 37:40<br>A 01 N 35:04 ) |
| Y | FR-A-2 398 089 (AMERICAN CYANAMID CO.)<br>* Page 1, lines 1-24; page 2, lines 3-14; page 3, line 29 - page 4, line 4; examples 7-11 *<br>– – – | 1-6 | |
| A | DE-A-3 335 360 (ROUSSEL-UCLAF)<br>* Claims 1,6,7,9 *<br>– – – | 1-6 | |
| A | US-A-4 888 175 (K.R. BURTON)<br>* Column 1, lines 5-18; column 3, lines 15-35; column 5, lines 24-47 *<br>– – – | 1-6 | |
| A | EP-A-0 281 398 (MORTON THIOKOL INC.)<br>* Page 2, lines 20-26, 50-54; page 3, lines 5-16; page 5, lines 2-41; page 6, lines 60 - page 8, line 50; page 15, lines 53-64; page 22, lines 2-4<br>* & US-A-4 761 247 (Cat. D)<br>– – – | 1-6 | TECHNICAL FIELDS SEARCHED (Int. Cl.5) |
| A | DIE MAKROMOLEKULARE CHEMIE, MACROMOLECULAR SYMPOSIA, vol. 27, April 1989, pages 239-244, Basel, CH; K. SEIFFARTH et al.: "Stabilization of low density polyethylene with sterically hindered derivatives of 4-hydroxybenzoic acid"<br>* Page 239 *<br>– – – | 1-6 | A 01 N<br>C 08 K 5 |
| A | CHEMICAL ABSTRACTS, vol. 102, no. 14, 8th April 1985, page 38, abstract no. 114481n, Columbus, Ohio, US; N.S. ALLEN et al.: "Photo-stabilizing action of a p-hydroxbenzoate light stabilizer in polyolefins: Part 111. Antioxidant behavior and additive/pigment interactions in high density polyethylene"<br>* Whole abstract *<br>– – – – – | 1-6 | |

The present search report has been drawn up for all claims

| Place of search | Date of completion of search | Examiner |
|---|---|---|
| The Hague | 04 July 91 | MUELLNERS W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document